## Europäisches Patentamt
## European Patent Office
## Office européen des brevets

(11) Veröffentlichungsnummer : **0 071 729**
**B1**

(12) **EUROPÄISCHE PATENTSCHRIFT**

(45) Veröffentlichungstag der Patentschrift :
**13.06.84**

(21) Anmeldenummer : **82105512.6**

(22) Anmeldetag : **23.06.82**

(51) Int. Cl.³ : **F 16 K 19/00**

(54) **Einloch-Mischbatterie.**

(30) Priorität : **06.08.81 DE 3131172**

(43) Veröffentlichungstag der Anmeldung :
**16.02.83 Patentblatt 83/07**

(45) Bekanntmachung des Hinweises auf die Patenterteilung : **13.06.84 Patentblatt 84/24**

(84) Benannte Vertragsstaaten :
**AT BE FR IT NL**

(56) Entgegenhaltungen :
**DE-A- 2 808 348**
**DE-A- 2 941 418**

(73) Patentinhaber : **Kludi-Armaturen Paul Scheffer**
**Landstrasse 2**
**D-5758 Fröndenberg (DE)**

(72) Erfinder : **Westerhoff, Horst**
**Am Tyrol 7**
**D-5870 Hemer (DE)**

(74) Vertreter : **Fritz, Herbert, Dipl.-Ing.**
**Mühlenberg 74**
**D-5760 Arnsberg 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Einloch-Mischbatterie mit einem am Batteriekörper angeformten Einsteckstutzen, mit einer Mischvorrichtung für das einem Auslauf zugeführte Wasser und mit einem zusätzlichen Anschluß mit einer Ventileinrichtung für eine Haushaltsmaschine, wobei die Kanäle für den Warm- und Kaltwasserzulauf und der Kanal für den zusätzlichen Anschluß im Einsteckstutzen angeordnet sind.

Es ist bekannt, den Wasseranschluß von Haushaltsmaschinen, wie Wasch- oder Spülmaschinen, an Einloch-Mischbatterien vorzusehen. So zeigt beispielsweise die DE-C-17 59 290 eine derartige Einloch-Mischbatterie, in deren Einsteckstutzen ein oder zwei zusätzliche Kanäle ausgebildet sind, die durch ein oder zwei frontal an der Mischbatterie vorgesehene Absperrventile mit einem Kaltwasserzulaufkanal verbunden werden.

Durch die DE-A-30 13 651 ist eine Einloch-Mischbatterie bekannt, bei der ein frontales Regulierventil mit einer Steuerscheibe vorgesehen ist, mit dem der Maschinenanschluß mit Mischwasser beschickt werden kann. Bei jeder der bekannten Einloch-Mischbatterien sind mindestens drei Ventile vorgesehen.

Der Erfindung liegt die Aufgabe zugrunde, eine Einloch-Mischbatterie zu vereinfachen, so daß der frontale Ventilkörper für den Maschinenanschluß wegfallen kann.

Gemäß der Erfindung wird dieses bei einer Einloch-Mischbatterie der eingangs erwähnten Bauart dadurch gelöst, daß die Mischvorrichtung für das dem Auslauf zugeführte Mischwasser als aus nur aus einem Ventil bestehender Einhandmischer ausgebildet ist und daß das am Batteriekörper ansonsten nötige zweite Ventil für den Maschinenanschluß vorgesehen ist. Damit ist es möglich, eine Einloch-Mischbatterie mit Maschinenanschluß mit nur zwei Ventilen auszuführen. Die Mischvorrichtung für den Auslauf kann eine an sich bekannte drehbare Steuerscheibe aufweisen und ihr kann ein Zulaufkanal für das Kaltwasser, ein Zulaufkanal für das Warmwasser und ein zum Auslauf führender Kanal für das Mischwasser zugeordnet sein.

Dem Ventil für den Maschinenanschluß kann entsprechend ein Zulaufkanal und ein Ablaufkanal für Kaltwasser zugeordnet sein.

Die Steuerung der Mischwassermenge und des Mischungsverhältnisses erfolgt demnach in an sich bekannter Weise allein durch nur ein Ventil, beispielsweise durch das rechte von in V-Anordnung angeordneten Ventilen. Das linke Ventil ist dann für den Maschinenanschluß vorbehalten. An einer derartig ausgebildeten Einloch-Mischbatterie entfallen die ansonsten nötigen frontalen Ventile. Dadurch ist es möglich, beispielsweise eine Einloch-Mischbatterie mit ästhetisch schöner Formgestaltung zu schaffen.

Wenn statt eines fest angeordneten, schwenkbaren Auslaufes eine Handbrause an der Einloch-Mischbatterie vorgesehen sein soll, kann in Weiterbildung der Erfindung vorgesehen sein, daß in dem Batteriekörper und dem Einsteckstutzen ein Kanal für einen Schlauch und im Einsteckstutzen ein Kanal für das Mischwasser angeordnet sind und daß der Schlauch unterhalb des Einsteckstutzens an den Kanal für das Mischwasser anschließbar ist. Der Schlauch der Handbrause wird demnach durch die Einloch-Mischbatterie geführt und kann aus dieser herausgezogen werden. Wenn die Brause nicht mehr benutzt wird, wird der Schlauch durch die Mischbatterie hindurchgesteckt und die Brause findet Halt an der Mischbatterie. Der Schlauch ist dann so verstaut, daß er nicht hinderlich im Wege und nicht zu sehen ist.

Wenn an dem Maschinenanschluß nicht nur kaltes Wasser abgenommen werden soll, sondern auch warmes, kann vorgesehen werden, daß das Ventil für den Maschinenanschluß als Drehscheiben-Regulierventil ausgebildet ist und daß dem Ventil ein Zulaufkanal für das Kaltwasser, ein Zulaufkanal für das Warmwasser und ein Ablaufkanal für Kalt- oder Warmwasser zu dem Maschinenanschluß zugeordnet sind. Dabei kann in Weiterbildung die Steuerscheibe des Regulierventils nur eine Steuerbohrung aufweisen, so daß durch einfaches Drehen in oder entgegen der Uhrzeigerrichtung kaltes oder heißes Wasser dem Maschinenanschluß zugeführt werden kann.

Die Erfindung wird im Folgenden an Hand zweier Ausführungsbeispiele unter Bezugnahme auf die Zeichnung näher erläutert. Es zeigen :

Figur 1   eine Einloch-Mischbatterie mit Handbrause und Maschinenanschluß,

Figur 2   einen Schnitt durch die Batterie nach Fig. 1 gemäß der Linie II-II von Fig. 4,

Figur 3   eine Draufsicht auf den Körper der Einloch-Mischbatterie nach Fig. 1,

Figur 4   einen Schnitt gemäß der Linie IV-IV von Fig. 2,

Figur 5   einen Querschnitt durch ein zweites Ausführungsbeispiel einer Einloch-Mischbatterie gemäß der Linie V-V von Fig. 6 und

Figur 6 ein Schnitt gemäß der Linie VI-VI von Fig. 5.

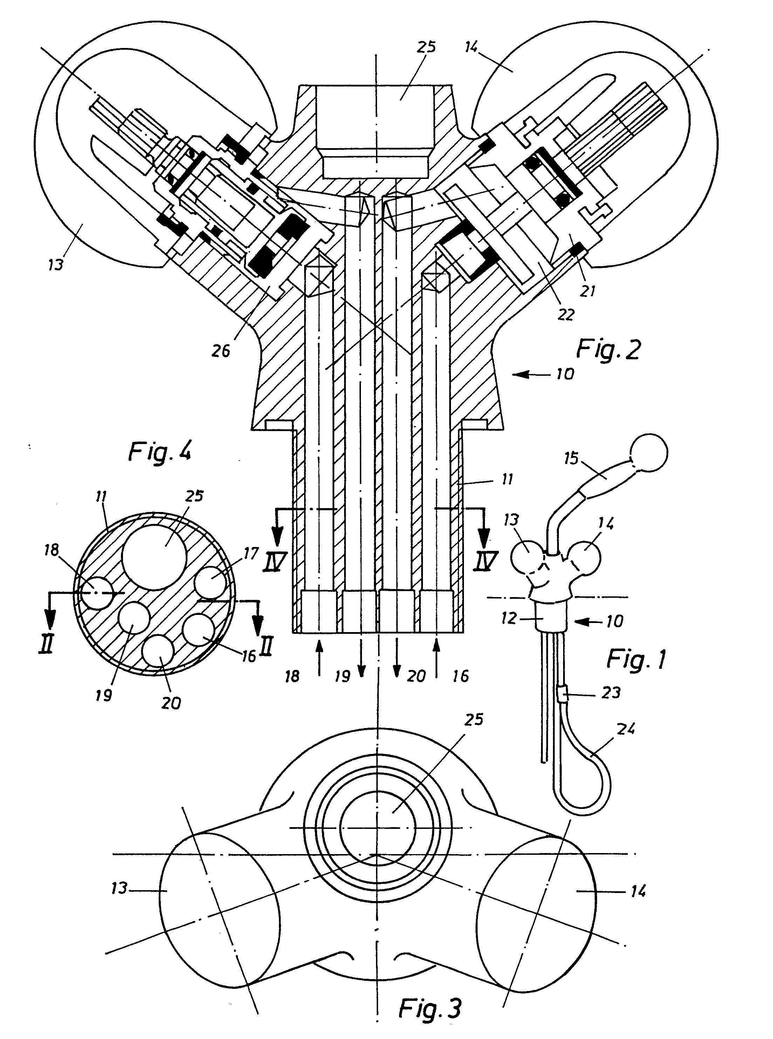

Der Batteriekörper 10 einer in den Fig. 1 bis 4 gezeigten Einloch-Mischbatterie, insbesondere zum Aufsetzen auf Spültische, weist untenseitig einen angeformten Einsteckstutzen 11 auf, der ein Außengewinde für eine nach dem Durchstecken durch eine Haltewandung aufschraubbare Befestigungsmutter besitzt.

An der über dem Einsteckstutzen 11 angeordneten Mischkammer 12 sind zwei Ventile 13 und 14 in V-Anordnung vorgesehen. Zwischen den Ventilen 13 und 14 ist eine Handbrause 15 vorgesehen.

In dem Einsteckstutzen 11 sind von unten fünf Kanäle, ein Warmwasserzulaufkanal 16, ein Kaltwasserzulaufkanal 17, ein Kaltwasserzulaufkanal 18, ein Kaltwasserablaufkanal 19 und ein Mischwasserablaufkanal 20 eingeführt. Der Kaltwasserablaufkanal 19 bildet dabei einen zusätzlichen Wasseranschluß, beispielsweise für eine Spül- oder Waschmaschine.

Der Warmwasserzulaufkanal 16 und der Kaltwasserzulaufkanal 17 führen in an sich bekannter Weise zu einem Einhandmischer 21. Dieser Einhandmischer 21 weist eine drehbare Steuerscheibe 22 auf, durch die die gewünschte Mischwassertemperatur eingestellt werden kann. Von dem Einhandmischer 21 gelangt das nunmehr gemischte Wasser in den Mischwasserablaufkanal 20, der unterhalb des Einsteckstutzens einen Anschluß 23 für den Schlauch 24 der Handbrause 15 aufweist. Der Schlauch 24 der Handbrause 15 wird durch einen Schlauchkanal 25 durch die Einloch-Mischbatterie geführt.

Der Kaltwasserzulaufkanal 18 führt zu dem Ventilsitz 26 des Absperrventils 13, welches die Verbindung zum Kaltwasserablaufkanal 19 bildet. An dem Kaltwasserablaufkanal 19 ist unterhalb des Einsteckstutzens der Anschluß für die Haushaltsmaschine angebracht.

Anstatt der Führung des Mischwasserablaufkanals 20 durch den Einsteckstutzen nach unten zum Anschluß für die Handbrause, könnte der Mischwasserablaufkanal direkt zu einem nicht von der Einloch-Mischbatterie abnehmbaren Schwenkauslauf geleitet werden. Wie insbesondere aus Fig. 3 zu ersehen, sind die Ventile 13 und 14 in V-Anordnung an der Einloch-Mischbatterie angeordnet. Da nur noch zwei Ventile vorgesehen sind, ist es möglich, eine Mischbatterie mit ästhetisch schöner Formgestaltung zu schaffen.

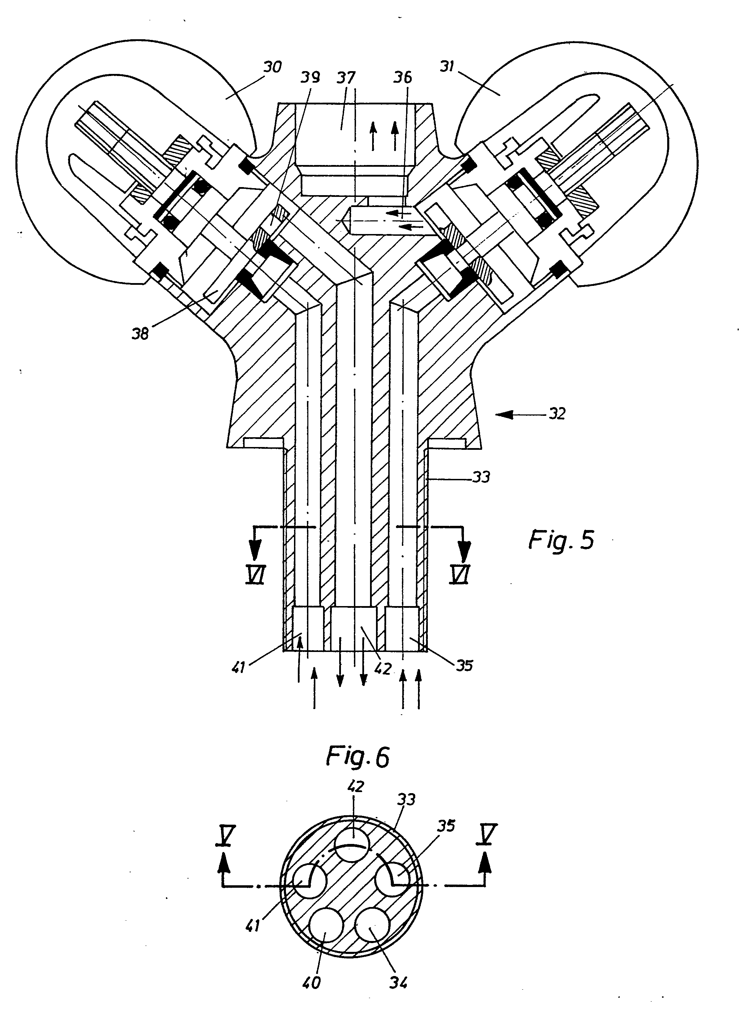

Fig. 5 zeigt im Schnitt eine Einloch-Mischbatterie mit ebenfalls in V-Anordnung angeordneten zwei Ventilen 30 und 31. Der Batteriekörper 32 besitzt einen unten angeformten Einsteckstutzen 33 mit Außengewinde. Von unten sind, wie insbesondere Fig. 6 zeigt, fünf Kanäle eingeführt : ein Warmwasserzulaufkanal 34 und ein Kaltwasserzulaufkanal 35 für das als Einhandmischer ausgebildete Ventil 31, von dem das Mischwasser durch eine Bohrung 36 und einen Kanal 37 einem nicht gezeigten beispielsweise schwenkbaren Auslauf zugeführt wird.

Das Ventil 30 ist als Automat-Ventil ausgebildet und mit einer Steuerscheibe 38 versehen, die nur eine Steuerbohrung 39 aufweist. Dem Automat-Ventil 30 sind durch den Einsteckstutzen 33 ein Kaltwasserzulaufkanal 40 und ein Warmwasserzulaufkanal 41 zugeführt. Von dem Automat-Ventil 30 führt ein Kanal 42 durch den Einsteckstutzen nach unten zu dem Anschluß für die Haushaltsmaschine. Durch die Steuerscheibe 38 ist es möglich, dem Ablaufkanal 42 durch eine Linksdrehung heißes Wasser und durch eine Rechtsdrehung kaltes Wasser zuzuführen. Durch den Einsteckstutzen 33 sind bei diesem Ausführungsbeispiel fünf Kanäle, vier Zulaufkanäle und ein Ablaufkanal ausgebildet.

Wenn das Automat-Ventil 30 durch einen Einhandmischer ersetzt wird, ist es möglich, dem Ablaufkanal 42 anstatt nur kaltem oder warmen Wasser auch Mischwasser zuzuführen.

## Ansprüche

1. Einloch-Mischbatterie mit einem am Batteriekörper (10, 32) angeformten Einsteckstutzen (11, 33), mit einer Mischvorrichtung (14, 31) für das einem Auslauf (20, 37) zugeführte Wasser und mit einem zusätzlichen Anschluß für eine Haushaltsmaschine mit einer Ventileinrichtung (13, 30), wobei die Kanäle für den Warm- und Kaltwasserzulauf und der Kanal für den zusätzlichen Anschluß im Einsteckstutzen angeordnet sind, dadurch gekennzeichnet, daß die Mischvorrichtung (14, 31) für das dem Auslauf (20, 37) zugeführte Mischwasser als aus nur aus einem Ventil bestehender Einhandmischer ausgebildet ist und daß das am Batteriekörper ansonsten nötige zweite Ventil (13, 30) für den Maschinenanschluß vorgesehen ist.

2. Einloch-Mischbatterie nach Anspruch 1, dadurch gekennzeichnet, daß die Mischvorrichtung (14, 31) für den Auslauf (20, 37) eine an sich bekannte drehbare Steuerscheibe (22) aufweist und das der Mischvorrichtung ein Zulaufkanal (17, 35) für Kaltwasser, ein Zulaufkanal (16, 34) für Warmwasser und ein zum Auslauf führender Kanal (20, 37) für Mischwasser zugeordnet sind.

3. Einloch-Mischbatterie nach Anspruch 1 oder 2, dadurch gekennzeichnet, daß dem Ventil (13, 30) für den Maschinenanschluß ein Zulaufkanal (18, 40, 41) und ein Ablaufkanal (19, 42) zugeordnet sind.

4. Einloch-Mischbatterie nach einem der Ansprüche 1 bis 3, dadurch gekennzeichnet, daß das dem Auslauf zugeordnete Ventil (14, 31) und das dem Maschinenanschluß zugeordnete Ventil (13, 30) in V-Anordnung an dem Batteriekörper angeordnet sind.

5. Einloch-Mischbatterie nach einem der Ansprüche 1 bis 4, dadurch gekennzeichnet, daß in dem Batteriekörper und dem Einsteckstutzen (11) ein Kanal (25) für einen Schlauch (24) und im Einsteckstutzen (11) ein Kanal (20) für das Mischwasser angeordnet sind und daß der Schlauch (24) unterhalb des Einsteckstutzens (11) an den Kanal (20) für das Mischwasser anschließbar ist.

6. Einloch-Mischbatterie nach einem der Ansprüche 1 bis 5, dadurch gekennzeichnet, daß das Ventil (30) für den Maschinenanschluß als Drehscheibenregulierventil ausgebildet ist und daß dem Ventil ein Zulaufkanal (40) für das Kaltwasser, ein Zulaufkanal (41) für das Warmwasser und ein Ablaufkanal (42) für Kalt- oder Warmwasser zu dem Maschinenanschluß zugeordnet sind.

7. Einloch-Mischbatterie nach Anspruch 6, dadurch gekennzeichnet, daß die Steuerscheibe (38) des Regulierventils (30) nur eine Steuerbohrung (39) aufweist.

8. Einloch-Mischbatterie nach einem der Ansprüche 1 bis 5, dadurch gekennzeichnet, daß das Ventil (30) für den Maschinenanschluß als Einhandmischer ausgebildet ist.

## Claims

1. A single-hole mixing tap with a plug-in connection piece (11, 33) formed integral with the body (10, 32) of the tap, with a mixing device (14, 31) for the water fed to a discharge duct (20, 37), and with an additional connector for a household appliance having a valve arrangement (13, 30), the ducts for the supply of warm and cold water and the duct for the additional connector being arranged in the plug-in connection piece, characterised in that the mixing device (14, 31) for the mixed water fed to the discharge duct (20, 37) is in the form of a one-hand mixer consisting of only one valve, and that the second valve (13, 30) otherwise required on the body of the tap is used for the connection of the household appliance.

2. A single-hole mixing tap according to claim 1, characterised in that a rotatable control disc (22) known per se is associated with the mixing device (14, 31) for the discharge duct (20, 37), and that a supply duct (17, 35) for cold water, a supply duct (16, 34) for warm water, and a duct (20, 37) for mixed water and leading to the discharge duct are associated with the mixing device.

3. A single-hole mixing tap according to claim 1 or 2, characterised in that a supply duct (18, 40, 41) and a discharge duct (19, 42) are associated with the valve (13, 30) for the connection of the household appliance.

4. A single-hole mixing tap according to one of claims 1 to 3, characterised in that the valve (14, 31) associated with the discharge and the valve (13, 30) associated with the connection of the household appliance are arranged in the form of a « V » on the body of the tap.

5. A single-hole mixing tap according to one of claims 1 to 4, characterised in that a duct (25) for a hose (24) is arranged in the body of the tap and in the plug-in connection piece (11), that a duct (20) for the mixed water is arranged in the plus-in connection piece (11), and that the hose (24) can be coupled up with the duct (20) for the mixed water at a position below the plug-in connection piece (11).

6. A single-hole mixing tap according to one of claims 1 to 5, characterised in that the valve (30) for the connection of the household appliance is a rotating-disc regulating valve and that a supply duct (40) for the cold water, a supply duct (41) for the warm water and a discharge duct (42) for warm or cold water from the connection of the household appliance are associated with the valve (30).

7. A single-hole mixing tap according to claim 6, characterised in that the control disc (38) of the regulating valve (30) has only one control bore (39).

8. A single-hole mixing tap according to one of claims 1 to 5, characterised in that the valve (30) for the connection of the household appliance is a one-hand mixer.

## Revendications

1. Robinet mélangeur monotrou comportant une tubulure enfichable (11, 33) formée sur le corps (10, 32) du robinet, un dispositif de mélange (14, 31) pour l'eau acheminée à une sortie (20, 37), ainsi qu'un raccordement supplémentaire pourvu d'un dispositif à vanne (13, 30) pour un appareil électroménager, les canaux prévus pour l'alimentation d'eau chaude et d'eau froide et le canal prévu pour le raccordement supplémentaire étant disposés dans la tubulure enfichable, caractérisé en ce que le dispositif de mélange (14, 31) prévu pour l'eau mélangée acheminée à la sortie (20, 37) est réalisé sous forme d'un mélangeur à une main constitué d'une seule vanne, tandis que la deuxième vanne (13, 30) par ailleurs nécessaire sur le corps du robinet est prévue pour le raccordement d'un appareil.

2. Robinet mélangeur monotrou suivant la revendication 1, caractérisé en ce que le dispositif de mélange (14, 31) comporte, pour la sortie (20, 37), un disque de commande rotatif connu en soi (22) tandis que, au dispositif de mélange, sont attribués un canal d'alimentation (17, 35) pour l'eau froide, un canal d'alimentation (16, 34) pour l'eau chaude et un canal (20, 37) pour l'eau mélangée, ce dernier canal allant à la sortie.

3. Robinet mélangeur monotrou suivant la revendication 1 ou 2, caractérisé en ce que, à la vanne (13, 30) prévue pour le raccordement d'un appareil, sont attribués un canal d'alimentation (18, 40, 41) et un canal d'évacuation (19, 42).

4. Robinet mélangeur monotrou suivant une des revendications 1 à 3, caractérisé en ce que la vanne (14, 31) attribuée à la sortie et la soupape (13, 30) attribuée au raccordement d'un appareil sont disposées en V sur le corps du robinet.

5. Robinet mélangeur monotrou suivant une des revendications 1 à 4, caractérisé en ce que, dans le corps du robinet et la tubulure enfichable (11), est prévu un canal (25) pour un tuyau (24) et, dans la tubulure enfichable (11), est prévu un canal (20) pour l'eau mélangée, tandis que le tuyau (24) peut être raccordé, en dessous de la tubulure enfichable (11), au canal (20) prévu pour l'eau mélangée.

6. Robinet mélangeur monotrou suivant une des revendications 1 à 5, caractérisé en ce que la soupape (30) prévue pour le raccordement d'un appareil est réalisée sous forme d'une vanne de réglage à disque rotatif tandis que, à cette vanne, sont attribués un canal d'alimentation (40) pour l'eau froide, un canal d'alimentation (41) pour l'eau chaude et un canal d'évacuation (42) pour l'eau froide ou l'eau chaude, en direction du raccordement à l'appareil.

7. Robinet mélangeur monotrou suivant la revendication 6, caractérisé en ce que le disque de commande (38) de la vanne de réglage (30) ne comporte qu'un seul passage de commande (39).

8. Robinet mélangeur monotrou suivant une des revendications 1 à 5, caractérisé en ce que la vanne (30) prévue pour le raccordement à l'appareil est réalisée sous forme d'un mélangeur à une main.

Fig. 2

Fig. 4

Fig. 1

Fig. 3

Fig. 5

Fig. 6